# EUROPEAN PATENT APPLICATION

(11) **EP 3 296 652 A1**
(43) Date of publication of application: **21.03.2018**
(21) Application number: 16189726.9
(22) Date of filing: 20.09.2016
(51) Int. Cl.: F24F 11/00, F24F 1/00, G06Q 50/06

(54) **METHOD FOR REDUCING LATENT HEAT IN A SPACE**

(71) Applicant: Siemens Schweiz AG, 8047 Zürich (CH)
(72) Inventor: Gwerder, Markus, 6312 Steinhausen (CH)
(74) Representative: Maier, Daniel Oliver

(57) **Abstract**

Latent heat reduction. A method for controlling a HVAC installation for a space (1 - 3) in accordance with a target value, the HVAC installation comprising an inlet conduit and an outlet conduit, a temperature sensor (14 - 16) and a moisture sensor (14 - 16), and a fan coil unit (27, 34) configured to remove latent heat from air, the method comprising the steps of: reading signals from each of the moisture sensor (14 - 16) and the temperature sensor (14 - 16), deriving measured quantities for the signals read from the sensors (14 - 16), determining an amount of latent heat in the space (1 - 3) as a function of the measured quantities, determining the energy required for removal of the determined amount of latent heat from the space (1 - 3) as a function of the determined amount of latent heat and as a function of the target value.

## Description

### Background

The present disclosure relates to moisture reduction in structures. More specifically, the instant disclosure teaches dehumidification in tropical and / or humid climates.

Structures such as commercial, residential and / or industrial buildings frequently provide a heating, ventilation, air-conditioning, (HVAC) system. HVAC systems may comprise water cooling units in addition to ventilation units. Water cooling units may, by way of example, be mounted to the ceiling of a structure.

Systems with combined ventilation and water cooling units are effective at lowering airflow required for cooling, since the cooling load can largely be covered by the water system. These systems ideally lower airflow to an amount required to maintain hygiene. HVAC systems with combined ventilation and water cooling units also offer benefits in terms of allowing the use of small-sized or medium-sized ventilation systems.

Ventilation systems may then be employed that supply a plurality of spaces, in particular a plurality of rooms, within a structure. HVAC systems with combined ventilation and water cooling units also allow decentralized ventilation units. That said, reduced rates of airflow also entail a significant reduction in capacity for moisture removal.

HVAC systems, in particular systems for commercial and / or industrial sites, frequently enter into economy mode on weekends and / or during night-time. A HVAC system in economy mode generally allows for larger deviations from set points used by a system in comfort mode. That is, humidity and / or temperature will generally deviate further from their comfort set points on weekends than on working days.

Accordingly, a transition from economy mode to comfort mode must often be effected early morning. This transition means that temperature and / or humidity have to be brought closer to their comfort set points. A controller thus changes a set of (proportional, integral, derivative) parameters and / or set point values to accomplish the transition. The controller controls ventilation and / or water cooling systems of a HVAC installation accordingly.

As the system transitions from economy to comfort mode, the amount of latent heat to be removed may be significant. Tropical climates further exacerbate the problem due to high levels of outside air humidity. The system controller then has to accomplish the tasks of removing excess humidity and of adjusting temperature toward a set point.

Temperature and humidity inside an industrial, commercial and / or residential building generally have to be within acceptable limits as the building is in use. The HVAC installation thus has to begin the transition from economy settings to comfort settings in a timely manner.

The process of changing from economy mode to comfort mode involves conflicting technical requirements. The transition needs to be effected in a timely manner. The transition is ideally also carried out in a cost-effective manner. That is, power consumption and / or the cost associated with power consumption should be kept to a minimum.

The aim of the present disclosure is at least to mitigate the aforementioned difficulties and to optimize a HVAC system in view of cost-effectiveness and minimum power consumption.

### Summary

The present disclosure is based on the discovery that a stepwise transition from economy mode to comfort mode entails significant reductions in power intake and / or in cost. In a first step, the air-conditioning unit gets activated. The first step entails essentially a reduction in latent heat. In a second step, the water cooling unit gets activated in addition to the ventilation system. The second step also removes substantial sensible heat and / or reduces the difference between actual room temperature and set point temperature. The activation of the water cooling unit supports the dehumidification task of the ventilation unit by (sensibly) pre-cooling the extract air.

The system in the first step operates so as to maximize moisture reduction of indoor air versus power intake and / or over energy cost. To that end, the system activates indoor air circulation units as well as dedicated outside air units as required. The second step may actually overlap with the first steps depending on the characteristics of the refrigerant cooling unit.

The above problems are resolved by a controller and / or by a method according to the main claim(s) of this disclosure. Preferred embodiments of the present disclosure are covered by the dependent claims.

It is a further object of the instant disclosure to provide controller and / or a method wherein the circulation of air in the first step is a function of the power intake and / or the cost versus blower speed.

It is another object of the instant disclosure to provide a controller and / or a method that accounts for a disproportionate increase in power intake and / or cost with blower speed.

It is a further object of the instant disclosure to provide a controller and / or a method wherein the second step commences before the end of the first step when the water-cooling unit is a high-temperature cooling unit connected to a low-temperature-lift chiller.

It is a further object of the instant disclosure to provide a controller and / or a method wherein outside air will be introduced into the structure where dehumidification requires the outside air ventilation unit to operate at low load only.

It is a further object of the instant disclosure to provide a controller and / or a method that relies on measured quantities to further optimize the transition to comfort mode.

It is still a further object of the instant disclosure to provide a controller and / or a method wherein measured quantities are derived from signals obtained from (temperature and / or moisture) sensors.

It is a particular object of the instant disclosure to provide a controller and / or a method wherein measured quantities are obtained of flow rate, of temperature, and of humidity for supply air, and for extract air. Also, the fluid (water) cooling unit provides measured quantities of inlet temperature, of outlet temperature and of flow rate. In addition, the electrical power intake of the (gaseous) fluid conveyor is measured. The amount of power required for latent heat reduction is thus obtained directly.

It is another particular object of the instant disclosure to provide a controller and / or a method wherein all quantities but the flow rate of air are measured. The flow rate of air is then determined from the power balance of the (refrigerant) cooling coil taking into account conservation of energy.

It is another particular object of the instant disclosure to provide a controller and / or a method wherein all quantities but the power intake of the (gaseous) fluid conveyor are measured. An estimate of the power intake of the fluid conveyor can then be obtained from the technical specifications of the unit.

It is another particular object of the instant disclosure to provide a controller and / or a method wherein all quantities but the quantities relating to extract air are measured. It is then fair to assume that the quantities for extract air correspond to and / or are the same as the quantities for indoor air.

It is a further object of the instant disclosure to provide a controller and / or a method wherein condensation (on outer surfaces of cooling units) is inhibited.

It is still another object of the instant disclosure to provide a HVAC installation, in particular a variable air volume system, with a controller according to the instant disclosure.

### Brief description of the drawings

Various features will become apparent to those skilled in the art from the following detailed description of the disclosed non-limiting embodiments. The drawings that accompany the detailed description can be briefly described as follows:
FIG 1 is a block diagram showing the principal components of a HVAC installation according to the instant disclosure.
FIG 2 schematically depicts a controller in communication with actuators and sensors of a HVAC installation.
FIG 3 schematically depicts a controller in communication with actuators and sensors with an additional connection to a cloud computer.

### Detailed description

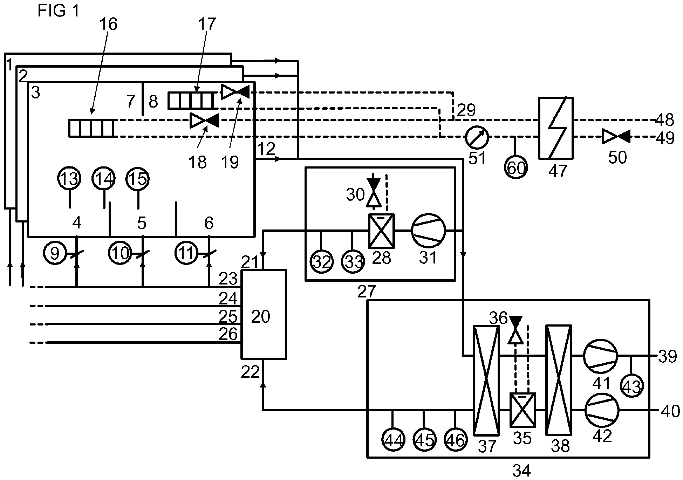

FIG 1 gives details of a heating, air-conditioning and / or ventilation (HVAC) installation according to the instant disclosure. A HVAC installation is typically installed in a structure such as a commercial, residential and / or industrial building. The structure of FIG 1 comprises a plurality of spaces 1, 2, 3 such as rooms. According to an aspect, the structure comprises a single space. Condensation is an issue for a wide range of typical building applications. It is also an issue in applications such as (gas-insulated) electric substations (with high-voltage equipment). A HVAC installation according to the instant disclosure may advantageously be installed in a building with a (gas-insulated) electric substation.

A space 1, 2, 3 provides a plurality of variable air volume segments 4, 5, 6. According to an aspect, at least one space 1 - 3 forms a single variable air volume segment. The variable air volume segments are part of the air cooling system of the structure.

In addition to air cooling, the space 3 shown on FIG 1 also provides two refrigerant cooling segments 7, 8. In an embodiment, water is employed as a refrigerant. In another embodiment, a blend of water and of an antifreeze agent such as glycol is employed as a refrigerant. The refrigerant may, by way of non-limiting example, also be a R-401A, R-404A, R-406A, R-407A, R-407C, R-408A, R-409A, R-410A, R-438A, R-500, or a R-502 blend.

The number of refrigerant cooling segments 7, 8 needs not match the number of variable air volume segments 4, 5, 6. According to an aspect, a space of the structure provides a single variable air volume segment and a single refrigerant cooling segment. According to another aspect, at least a space 1 - 3 has a single variable air volume segment and multiple refrigerant cooling segments. According to yet another aspect, at least a space 1 - 3 comprises a single refrigerant cooling segment and multiple variable air volume segments. In a preferred embodiment, there is a least one space with at least one variable air volume segment and with at least one refrigerant cooling segment.

In the exemplary embodiment shown on FIG 1, each variable air segment 4, 5, 6 comes with an inlet duct. Each inlet duct is in fluid communication with space 3. Each duct optionally comes with a control valve and / or with a damper 9, 10, 11. The control valves and / or dampers 8, 10, 11 function to control the amount of fluid conveyed into space 3.

The structure also provides at least one space 3 with an extract air duct 12. Extract air duct 12 is in fluid communication with the space 3. Extract air duct 12 is also in fluid communication with the exterior of the structure. Fluids (such as air) flow out of the space 3 via exhaust duct 12. The combination of supply air ducts and extract air duct 12 also allows purging air in space 3 thereby maintaining hygiene.

A plurality of sensors 13, 14, 15 is installed in space 3. These sensors 13, 14, 15 are employed to take readings of temperature, of moisture, of dew point, of relative and / or absolute pressure etc. It is also envisaged to employ sensors 13, 14, 15 that take readings of quantities related to air quality such as CO₂ concentration or volatile organic compounds. According to an aspect, at least one sensor 13, 14, 15 is a constrained sensor (with radio frequency and / or energy harvesting modules).

Sensors 13, 14, 15 send their signals to a controller. No signal paths are shown on FIG 1. Sensors 13, 14, 15 connect to a controller via a suitable bus. Suitable busses are, by way of non-limiting example, power over ethernet busses. It is envisaged that a bus does not only function to transmit analog or digital signals but also to supply sensors 13, 14, 15 with (up to 25.5 Watts of) power.

Each refrigerant cooling segment 7, 8 provides at least one cooling unit 16, 17. It is envisaged that the at least a cooling unit 16, 17 comprises a cooling battery and / or a chilled ceiling and / or a chilled beam (active or passive). The cooling units 16, 17 of the HVAC system connect to a refrigerant circuit where they absorb cold. The cooling units then release cold into the space 3. According to an aspect, each refrigerant cooling segment also comes with a moisture sensor and / or with a dew point sensor. The moisture sensor and / or the dew point sensor may in an exemplary embodiment be mounted to the cooling units 16, 17. It is envisaged that cooling units 16, 17 form integrated units and provide multiple functionalities such as heating, cooling, sensors, interfaces and / or connectors for refrigeration circuits, sensors, (electric) power, (aspirated) smoke detectors etc. In a particular embodiment, the cooling units 16, 17 also provide lighting.

Cooling units 16, 17 connect to refrigerant circuit via valves 18, 19. Valves 18, 19 are control valves and connect to a controller. FIG 1 indicates no signal paths. It is envisaged that control valves 18, 19, dampers 9, 10, 11, and sensors 13, 14, 15 all connect to the same controller.

Control valves 18, 19 connect to the controller via suitable bus. Suitable busses are, by way of non-limiting example, power over ethernet busses. It is envisaged that a bus does not only function to transmit analog or digital digital signals but also supplies the valves 18, 19 with (up to 25.5 Watts of) power. The same considerations apply to dampers 9, 10, 11.

The (gaseous) fluid circuit provides a distribution unit 20. Distribution unit 20 provides at least two inlet ports 21, 22. A first inlet port 21 is employed for indoor fluid (indoor air) to flow into distribution unit 20. A second inlet port 22 is employed for outdoor fluid (outdoor air) to flow into distribution unit 20. Distribution unit 20 thus collects both indoor fluid and outdoor fluid. Distribution unit 20 mixes these fluids depending on demand. It is envisaged that distribution unit 20 provides dampers in order for distribution unit 20 to set a mixing ratio between indoor fluid and outdoor fluid. It is also envisaged that distribution unit 20 provides non-return dampers that direct a fluid such as air into the desired direction.

Distribution unit 20 comes with at least an outlet port. A total of four outlet ports 23 - 26 are shown on FIG 1. Distribution unit 20 provides fluid paths from each of the inlet ports 21 - 22 to each of the outlet ports 23 - 26. The outlet ports 23 - 26 connect to ducts that guide a fluid such as air from distribution unit 20 into spaces 1 - 3.

At certain times of the year, a transition from comfort mode to economy mode may require no or little dehumidification. It is envisaged that in such situations the distribution unit 20 directs outside fluid (outside air) into at least one space 1 - 3 of the structure. The fluid inside the at least one space 1 - 3 is thus purged and /or hygiene is maintained.

In an embodiment, moisture sensors and / or by dew point sensors installed inside and / or outside the structure provide signals. Quantities relating to humidity inside the structure and outside structure are then derived from the readings of such sensors. Those quantities may indicate that outside fluid is less humid (has less latent heat) than the fluid inside one of the spaces 1 - 3.

Distribution unit 20 and dampers 9 - 11 may vent a space 1 - 3 with outside air in order to reduce levels of moisture. It is envisaged that distribution unit 20 connects to a controller. The controller sends instructions to the distribution unit 20. Distribution unit 20 moves any (internal) damper actuators in accordance with such instructions and introduces fresh air into a space 1 - 3. In a particular embodiment, distribution unit 20 connects to the same controller as sensors 13 - 15, dampers 9 - 11, and control valves 18 - 19. It is envisaged that a power over ethernet bus transmits signals to and from the distribution unit 20. It is also envisaged that a power over ethernet bus supplies distribution unit 20 with (up to 25.5 Watts of) power.

Inlet port 21 of distribution unit 20 connects to a fan coil unit 27 via another duct. Fan coil unit 27 comprises a heat exchanger 28. The cooling coil 28 of FIG 1 transfers heat between a fluid such as air and a refrigerant such as water. It is envisaged that the cooling coil 28 is fitted with and / or provides at least a cold meter (in communication with a controller, preferably in communication with a central controller).

In an embodiment, heat exchanger 28 connects to a separate refrigerant circuit. It is also envisaged to employ a heat exchanger 28 wherein heat is exchanged between a first fluid such as inside air and a second fluid such as air.

Fan coil unit 27 also provides a fluid conveyor 31 such as a fan and / or a blower. Fluid mover 31 conveys a fluid such as air through the fan coil unit 27. In particular, fluid conveyor 31 conveys a fluid such as air through heat exchanger 28 and toward distribution unit 20. According to an aspect, the speed of fan 31 is set via pulse-width modulation. According to another aspect, an inverter sets the speed of fan 31. The speed of fan 31 then corresponds to the frequency of the alternating current produced by the inverter.

Fan coil unit 27 comprises a plurality of sensors 32 - 33. These sensors 32 - 33 are advantageously arranged inside the duct that connects fan coil unit 27 to the inlet port 21 of distribution unit 20. The sensors 32 - 33 ideally comprise a temperature sensor and / or a moisture sensor and / or a dew point sensor and / or a sensor for air quality, in particular a sensor for volatile organic compounds, and / or a flow sensor for measuring mass flow and / or volume flow and / or a combination thereof. According to an aspect, a mass flow sensor such as an OMRON® type D6F-W sensor or a SENSOR TECHNICS® type WBA sensor is employed. The useful range of these mass flow sensors starts at velocities as low as 0.01 m/s or as low as 0.1 m/s. The upper limit of the useful range typically is 5 m/s or 10 m/s, in some cases 15 m/s or 20 m/s, or even 100 m/s. In other words, these sensors allow measurements wherein lower limits for velocities such as 0.1 m/s are combined with upper limits such as 5 m/s, 10 m/s, 15 m/s, 20 m/s, oder even 100 m/s. This list is not exhaustive.

In an embodiment, a signal obtained from a flow sensor 32 - 33 is employed to control the capacity of fluid conveyor 31. A (proportional, integral and / or derivative) controller in communication with flow sensor 32 - 33 and with fluid conveyor 31 can thus control flow through fan coil unit 27 in accordance with a set point.

It is envisaged that sensors 32 - 33 and actuators 30, 31 of fan coil unit 27 connect to a controller. Controller also sends instructions to actuators 30, 31. Control valve 30 actuates its (internal) valve member in accordance with such instructions. The cooling and / or heating capacity produced by heat exchanger 28 is a function of the (axial) position of the valve member of valve 30.

Controller also receives signals from the sensors 32 - 33. According to an aspect, sensors 32 - 33, and actuators 30 - 31 connect to the same controller as sensors 13 - 15, dampers 9 - 11, control valves 18 - 19, and distribution unit 20. It is envisaged that a power over ethernet bus transmits signals to and from the fan coil unit 27. It is also envisaged that a power over ethernet bus supplies members 28, 30 - 33 of fan coil unit 27 with (up to 25.5 Watts of) power.

A fluid path for indoor air is formed by fan coil unit 27, distribution unit 20, dampers 9 - 11 as well as by the ducts and ports 4 - 6, 12, 21, 23 - 26 in between these members. Fluid mover 31 conveys a fluid out of the space 3, through the fan coil 27 and distribution units 20 and back into the space 3. A heat exchanger 28 is arranged in the fluid path to heat and / or to cool the fluid.

Coil 28 may also function to dehumidify an indoor fluid (air). To that end, coil 28 dehumidifies the fluid to a temperature that entails condensation of the moisture in the fluid. The process of dehumidification through heat exchanger 28 is also known as removal of latent heat. The process generally involves cooling the fluid to a temperature below its dew point.

The relationship between cooling capacity of coil 28 and power intake of coil 28 is generally not linear. Also, the relationship between the capacity of fluid conveyor 31 and power intake of fluid conveyor 31 is generally not a linear relationship. The same considerations apply to the relationships between cooling capacities and energy cost. In an embodiment, the cooling capacity of the fluid conveyor 31 and / or the cooling capacity of the coil 28 are set via a lookup table. The lookup table comprises entries that map cooling capacities of members 28, 31 to power intake and / or energy cost. In another embodiment, the lookup table joins the entries for the cooling capacities of the members 28, 31. The lookup table with joined entries thus maps combined cooling capacities of members 28, 31 to power intake and / or energy cost.

The system advantageously operates such that the cost of energy required to achieve a target dehumidification is minimized. To that end, a controller sums up (integrates) amounts of power intake and / or of energy cost to arrive at a total amount of energy and / or at a total cost. The controller determines the total amount of energy and / or the total cost associated with various dehumidification capacities of the coil 28 and / or of the fluid conveyor 31. The controller thus determines a table that maps settings (capacities) of the coil 28 and / or of the fluid conveyor 31 to an amount of energy and / or a total cost. Controller picks the entry from the table that minimizes the total amount of energy and / or the total cost for a given target dehumidification. Controller then sets and / or controls the capacities of members 28, 31 in accordance with aforesaid entry.

In an alternate embodiment, controller relies on mathematical relationships to map dehumidification capacities of the members 28, 31 to total amounts of energy and / or to energy cost. The mathematical relationships may, by way of non-limiting example, involve polynomials. The mathematical functions may, also by way of non-limiting example, involve functions that are defined piecewise. According to a related aspect, controller stores curves that describe dehumidification capacities of the members 28, 31 versus total amounts of energy and / or versus energy cost.

It is also envisaged that controller uses a genetic algorithm and / or a gradient descent algorithm to determine dehumidification capacities associated with minimum power intake and / or with minimum cost. In an alternate embodiment, fuzzy logics and / or neural networks are employed to minimize power intake and / or energy cost. The skilled person chooses a neural network with a suitable number of layers. The skilled person also trains the neural network with suitable data. It is further envisaged that the system uses a mixed-integer optimization algorithm to minimize the cost of energy and / or the power intake required to achieve target dehumidification.

The process of determining minimum total energy and / or minimum cost involves at least two boundary conditions. The first boundary condition is a target for moisture removal. This target typically depends on a set point and / or on a permissible deviation from the set point while in comfort mode. The second boundary condition is the maximum duration of the transition from economy mode to comfort mode. The change to comfort mode must typically be complete at a given point in time. This point in time limits the duration of the transition. Additional boundary conditions may apply such as boundary conditions for temperature.

The system of FIG 1 comprises an outside fluid unit 34 in addition to the fluid path 27, 20, 9 - 12 for inside fluid. The outside fluid unit 34 provides a fluid path from the outside of the structure to the spaces 1 - 3 of the structure. The outside fluid system connects to exhaust connector 12 of space 3 via a duct. The outside fluid system 34 also connects to the inlet port 22 of distribution device 20 via another duct.

Outside air unit 34 comprises a first heat exchanger 35. The coil 35 of FIG 1 transfers heat between a fluid such as outside air and a refrigerant such as water. To that end, outside air unit 34 connects a refrigerant circuit via control valve 36. The cooling and / or heating capacity produced by coil 35 may be set via control valve 36. It is envisaged that coil 35 is fitted with and / or provides at least a cold meter (in communication with a controller, preferably in communication with a central controller).

The heat exchanger 35 of the outside air unit 34 is shown on FIG 1 and connects to a (separate) refrigerant circuit. It is also envisaged to employ a heat exchanger 35 wherein heat is exchanged between a first fluid such as outside air and a second fluid such as air.

Outside fluid unit 34 also comprises second and third heat and / or humidity exchangers 37, 38. The heat exchangers 37, 38 of FIG 1 transfer heat between a fluid such as exhaust air in the exhaust duct 39 and fluid such as outside air in the inlet duct 40. In a preferred embodiment, heat exchangers 37, 38 comprise heat pumps. According to an aspect, at least one heat exchanger 37, 38 comprises a low-temperature-lift heat pump. According to another aspect, the second and the third heat exchanger 37, 38 each comprise a low-temperature-lift heat pump.

According to still another aspect, heat exchangers 37, 38 comprise heat recovery wheels (for heat and humidity transfer). It is also envisaged to employ heat exchangers 37, 38 with plate heat exchangers. These heat exchangers transfer heat only. It is further envisaged to employ heat exchangers 37, 38 with desiccant wheels. Desiccant wheels function to transfer both heat and moisture. According to a further aspect, heat exchangers 37, 38 comprise coil to coil heat exchangers. Coil to coil heat exchangers transfer heat only. The skilled person also employs suitable combinations of the above mentioned heat exchangers.

Outside air unit 34 further comprises a fluid conveyor 41 for exhaust fluid and / or a fluid conveyor 42 for inlet fluid. In an embodiment, fluid conveyor 41 for exhaust fluid comprises a fan and / or a blower. According to an aspect, the speed of fan 41 is set via pulse-width modulation. According to another aspect, an inverter sets the speed of exhaust fan 41. The speed of exhaust fan 41 then corresponds to the frequency of the alternating current produced by the inverter. According to an aspect, fluid conveyor 42 for inlet fluid comprises a fan and / or a blower. According to an aspect, the speed of fan 42 is set via pulse-width modulation. According to another aspect, an inverter sets the speed of inlet fan 42. The speed of inlet fan 42 then corresponds to the frequency of the alternating current produced by the inverter.

A sensor 43 is arranged near the exit of exhaust conduit 39. In a preferred embodiment, sensor 43 is a flow sensor for capturing mass flow and / or volume flow through conduit 39. It is also envisaged that sensor 43 is temperature sensor and / or a moisture sensor and / or a dew point sensor and / or a sensor for air quality, in particular a sensor for volatile organic compounds, and / or a flow sensor and / or a combination thereof. According to an aspect, a mass flow sensor such as an OMRON® type D6F-W sensor or a SENSOR TECHNICS® type WBA sensor is employed. The useful range of these mass flow sensors starts at velocities as low as 0.01 m/s or as low as 0.1 m/s. The upper limit of the useful range typically is 5 m/s or 10 m/s, in some cases 15 m/s or 20 m/s, or even 100 m/s. In other words, these sensors allow measurements wherein lower limits for velocities such as 0.1 m/s are combined with upper limits such as 5 m/s, 10 m/s, 15 m/s, 20 m/s, oder even 100 m/s. This list is not exhaustive.

A plurality of sensors 44 - 46 is installed inside the duct between outside fluid unit 34 and inlet port 22 of distribution device 20. The sensors 44 - 46 ideally comprise a temperature sensor and / or a moisture sensor and / or a dew point sensor and / or a sensor for air quality, in particular a sensor for volatile organic compounds, and / or a flow sensor for measuring mass flow and / or volume flow and / or a combination thereof. According to an aspect, a mass flow sensor such as an OMRON® type D6F-W sensor or a SENSOR TECHNICS® type WBA sensor is employed. The useful range of these mass flow sensors starts at velocities as low as 0.01 m/s or as low as 0.1 m/s. The upper limit of the useful range typically is 5 m/s or 10 m/s, in some cases 15 m/s or 20 m/s, or even 100 m/s. In other words, these sensors allow measurements wherein lower limits for velocities such as 0.1 m/s are combined with upper limits such as 5 m/s, 10 m/s, 15 m/s, 20 m/s, or even 100 m/s. This list is not exhaustive.

It is envisaged that the sensors 43 - 46 and the actuators 35 - 38, 41 - 42 of the outside fluid unit 34 connect to a controller. Controller also sends instructions to actuators 35 - 38, 41 - 42. Control valve 36 actuates its (internal) valve element in accordance with such instructions. The cooling and / or heating capacity produced by coil 35 is a function of the (axial) position of the valve member of valve 36. Fluid conveyors 41, 42 set their capacities (fan speeds and / or blower speeds) in accordance with instructions from controller. Flow through the ducts 39 and / or 40 is a function of the capacities of fluid conveyors 41 and / or 42.

Controller also receives signals from the sensors 43 - 46. According to an aspect, sensors 43 - 46, and actuators 35 - 38, 41 - 42 connect to the same controller as sensors 13 - 15, dampers 9 - 11, control valves 18 - 19, and distribution unit 20. It is envisaged that a power over ethernet bus transmits signals to and from the outside fluid unit 34. It is also envisaged that a power over ethernet bus supplies members 35 - 46 of outside fluid unit 34 with (up to 25.5 Watts of) power.

In an embodiment, a signal obtained from a flow sensor 43 is employed to control the capacity of fluid conveyor 41. A (proportional, integral and / or derivative) controller in communication with flow sensor 43 and with fluid conveyor 41 can thus control flow through outlet duct 39 in accordance with a set point.

In an embodiment, a signal obtained from a flow sensor 44 - 46 is employed to control the capacity of fluid conveyor 42. A (proportional, integral and / or derivative) controller in communication with flow sensor 44 - 46 and with fluid conveyor 42 can thus control flow through inlet duct 40 in accordance with a set point.

The refrigeration circuit 29 shown on FIG 1 also comprises a heat exchanger 47. Heat exchanger 47 transfers heat between a refrigerant inside inlet duct 48 and a refrigerant in outlet duct 49. It is envisaged that the refrigeration circuit 29 is fitted with and / or provides at least a cold meter (in communication with a controller, preferably in communication with a central controller).

A control valve 50 installed in the refrigerant circuit 29 controls and / or regulates (refrigerant) flow through heat exchanger 47. It is envisaged that at least one control valve 18, 19, 30, 36, 50 sets the (axial) position of its valve member in response to a pulse-width modulated signal. In an embodiment, control valve 50 sets the (axial) position of its valve member in response to a pulse-width modulated signal.

The refrigerant circuit 29 also comprises a pump 51. The pump 51 optionally comprises a sensor such as a flow sensor and / or a temperature sensor and / or a moisture sensor.

It is envisaged that any sensor 60 and any actuators 50 - 51 of the refrigerant circuit 29 connect to a controller. Controller also sends instructions to actuators 50 - 51. Control valve 50 actuates its (internal) valve member in accordance with such instructions.

It is envisaged that controller also receives signals from a sensor. According to an aspect, any sensor(s) 60 and actuators 50 - 51 connect to the same controller as sensors 13 - 15, dampers 9 - 11, control valves 18 - 19, and distribution unit 20. It is envisaged that a power over ethernet bus transmits signals to and from sensor(s) 60 and actuators 50, 51. It is also envisaged that a power over ethernet bus supplies members 50 - 51 of refrigerant circuit 29 with (up to 25.5 Watts of) power.

In an embodiment, a signal obtained from a flow sensor is employed to control the (axial) position of control valve 50. A (proportional, integral and / or derivative) controller in communication with flow sensor 51 and with control valve 50 can thus be employed to control flow through refrigerant circuit 29.

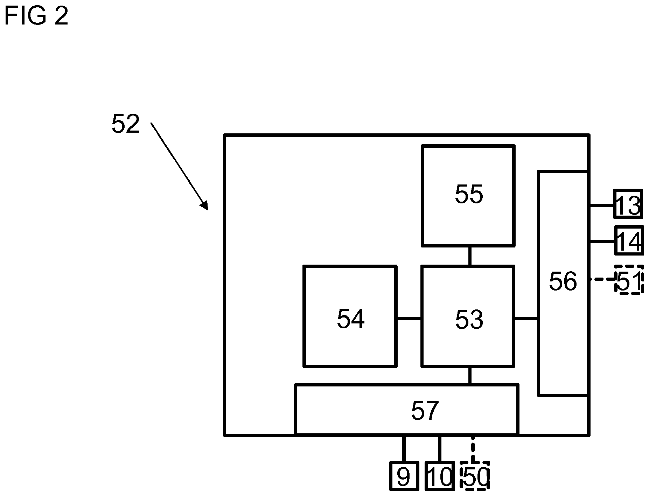

Now referring to FIG 2, a controller 52 for a HVAC installation is shown schematically. Controller 52 comprises a processor 53 and a memory 54. Controller 52 optionally also comprises a display 55. Processor 53 (bidirectionally) communicates with memory 54 and / or with display 55 via suitable interfaces.

Memory 54 advantageously stores data relevant to the operation of the HVAC system such as lookup tables, curves, piecewise defined functions etc. Processor 53 then reads these data from memory 54.

Display 55 could, by way of non-limiting example, be a monochrome display, a grayscale display, or a color screen with suitable resolution. Suitable resolutions include, but are not limited to, 426 x 320 pixels, 470 x 320 pixels, 640 x 480 pixels, or 960 x 720 pixels etc. The display may, for instance, be a liquid crystal screen, a cathode ray tube monitor, and / or a screen made of organic light-emitting diodes.

Controller 52 further comprises an input card 56. Input card 56 enables (bidirectional) communication between sensors 13 - 15, 32 - 33, 43 - 46, 51 of a HVAC installation and processor 53. It is envisaged that input card 56 connects to (reads signals from) sensors 13 - 15, 32 - 33, 43 - 46, 51 via power over ethernet cables. To that end, input card 56 provides suitable connectors. Sensors 13 - 15 also come with suitable connectors and / or with suitable interfaces. The skilled person understands that suitable interfaces may include analog to digital converters.

Controller 52 further comprises an output card 57. Output card 57 enables (bidirectional) communication between actuators 9 - 11, 18 - 20, 35 - 38, 47, 50 of a HVAC installation and processor 53. It is envisaged that output card 57 connects to (sends instructions to) actuators 9 - 11, 18 - 20, 35 - 38, 47, 50 via power over ethernet cables. To that end, output card 57 provides suitable connectors. Actuators 9 - 11, 18 - 20, 35 - 38, 47, 50 also come with suitable connectors and / or with suitable interfaces. The skilled person understands that suitable interfaces may include digital to analog converters.

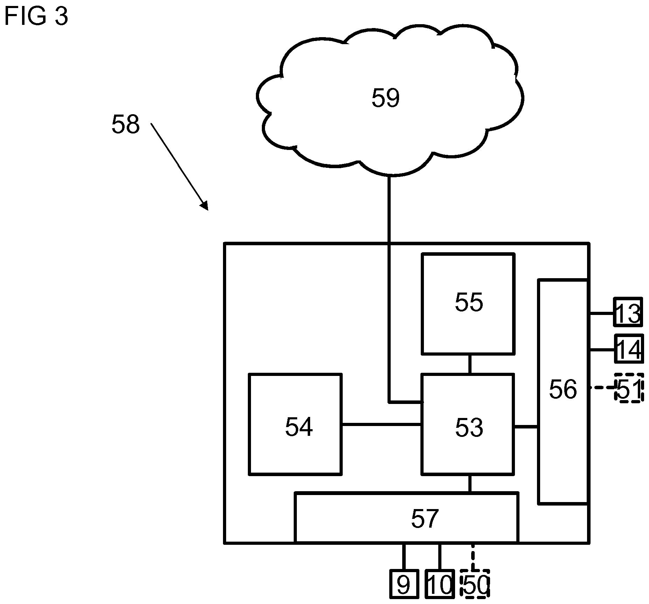

Now referring to FIG 3, a particular type of controller 59 is schematically depicted. Controller 58 of FIG 3 provides all the components of controller 52 of FIG 2. Controller 58 additionally comes with a connection to an external cloud computer 59.

Cloud computer 59 is advantageously located at a site remote from controller 58. Cloud computer 59 is preferably also located at a site remote from the HVAC installation of FIG 1. In an embodiment, cloud computer 59 connects to controller 58 via an internet connection. Controller 58 then provides suitable interfaces that enable communication between controller 58 and cloud computer 59. In an embodiment, controller 58 downloads data from cloud computer 59 in accordance with the file transfer protocol and / or by using a secure copy command.

According to an aspect, controller 58 downloads lookup tables, curves, piecewise defined functions etc from cloud computer 59. Processor 53 then reads the data downloaded from cloud computer 59. Ideally processor 53 can also replace existing lookup tables, curves, piecewise defined functions in the memory 54 with new ones downloaded from cloud computer 59.

Any steps of a method according to the present disclosure may be embodied in hardware, in a software module executed by a processor, in a cloud computing arrangement, or in a combination of these. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other information technology equipment and appliance.

In other words, the instant disclosure teaches a method for controlling a HVAC installation for at least a space 1 - 3 in accordance with a target value related to latent heat in the at least a space 1 - 3 and in accordance with a maximum duration for removal of latent heat from the at least a space 1 - 3, the HVAC installation comprising at least an inlet conduit and at least an outlet conduit, each conduit in fluid communication with the at least a space 1 - 3, at least a temperature sensor 14 - 16 inside the at least a space 1 - 3, at least a moisture sensor 14 - 16 inside the at least a space 1 - 3, and at least a fan coil unit 27, 34 configured to remove latent heat from a fluid flowing through the at least an inlet conduit and into the at least a space 1 - 3, the method comprising the steps of:
reading signals from each of the at least a moisture sensor 14 - 16 inside the at least a space 1 - 3 and the at least a temperature sensor 14 - 16 inside the at least a space 1 - 3,
deriving a plurality of measured quantities from the signals read from the sensors 14 - 16 disposed inside the at least a space 1 - 3,
determining an amount of latent heat in the at least a space 1 - 3 as a function of the plurality of measured quantities derived from the sensor signals,
determining an amount of energy required for removal of the determined amount of latent heat from the at least a space 1 - 3 as a function of the determined amount of latent heat in the at least a space 1 - 3 and as a function of the target value related to latent heat in the at least a space 1 - 3,
generating a load schedule for the at least a fan coil unit 27, 34 that minimizes the cost of energy required for removal of the determined amount of latent heat from the at least a space 1 - 3 under the boundary conditions of the target value related to latent heat in the at least a space 1 - 3 and of the maximum duration for removal of latent heat from the at least a space 1 - 3,
controlling the at least a fan coil unit 27, 34 in accordance with the generated load schedule.

In an embodiment, determining an amount of latent heat in the at least a space 1 - 3 is done by determining an amount of latent heat normalized to a mass (such as 1 kg of air in the at least a space 1 - 3).

The instant disclosure also teaches the aforementioned method, wherein the target value related to latent heat in the at least a space 1 - 3 is a moisture level inside the at least a space 1 - 3 at a given temperature inside the at least a space 1 - 3.

The instant disclosure further teaches any of the aforementioned methods, wherein the step of generating a load schedule for the at least a fan coil unit 27, 34 comprises the step of
determining at least two candidate schedules as a function of efficiency data and of the determined amount of latent heat,
wherein the efficiency data are indicative of amounts of latent heat removed versus energy cost produced by the at least a fan coil unit 27, 34.

The instant disclosure further teaches any of the aforementioned methods, wherein the step of generating a load schedule for the at least a fan coil unit 27, 34 comprises the step of generating at least two candidate schedules and determining the energy cost associated with each candidate schedule.

The instant disclosure also teaches the aforementioned method, wherein the step of generating a load schedule for the at least a fan coil unit 27, 34 comprises the step of comparing at least two candidate schedules in terms of the energy cost associated with the candidate schedules.

The instant disclosure also teaches the aforementioned method, wherein the step of generating a load schedule for the at least a fan coil unit 27, 34 comprises the step of selecting as the load schedule for the at least a fan coil unit 27, 34 the candidate schedule associated with the lowest energy cost.

The instant disclosure further teaches any of the aforementioned methods, wherein the at least a fan coil unit 27, 34 comprises at least a power sensor, the method further comprising the steps of
reading at least a signal from the at least a power sensor,
deriving a power intake of the at least a fan coil unit 27, 34 from the at least a signal read from the at least a power sensor, and
wherein the step of controlling the at least a fan coil unit 27, 34 in accordance with the generated load schedule comprises the step of
determining and tracking at least an error value as a function of the generated load schedule and of the power intake of the at least a fan coil unit 27, 34.

The instant disclosure also teaches the aforementioned method, wherein the step of controlling the at least a fan coil unit 27, 34 in accordance with the generated load schedule further comprises the step of
generating an output value as a function of the generated load schedule and as a function of the at least an error value.

The instant disclosure also teaches the aforementioned method, wherein the step of controlling the at least a fan coil unit 27, 34 in accordance with the generated load schedule further comprises the steps of
weighting the at least an error value by a proportional parameter,
integrating the at least an error value,
generating an output value as a function of the generated load schedule and as a function of the weighted at least an error value and as a function of the integrated at least an error value.

The instant disclosure further teaches any of the aforementioned methods, wherein the step of controlling the at least a fan coil unit 27, 34 in accordance with the generated load schedule further comprises the steps of
reading signals from each of the at least a moisture sensor 14 - 16 inside the at least a space 1 - 3 and the at least a temperature sensor 14 - 16 inside the at least a space 1 - 3,
deriving a plurality of measured quantities from the signals read from the sensors 14 - 16,
determining an amount of latent heat in the at least a space 1 - 3 as a function of the plurality of measured quantities derived from the sensor signals,
comparing the determined amount of latent heat in the at least a space 1 - 3 to the target value related to latent heat in the at least a space 1 - 3.

The instant disclosure also teaches the aforementioned method, the HVAC installation further comprising at least a refrigerant cooling unit 7 - 8 disposed inside the at least a space 1 - 3, the method further comprising the step of
activating the at least a refrigerant cooling unit 7 - 8 when the determined amount of latent heat in the at least a space 1 - 3 is equal to or less than the target value related to latent heat in the at least a space 1 - 3.

The instant disclosure further teaches any of the aforementioned methods, the HVAC installation further comprising at least a temperature sensor 32 - 33, 44 - 46 disposed outside the at least a space 1 - 3 and at least a moisture sensor 32 - 33, 44 - 46 disposed outside the at least a space 1 - 3, the method further comprising the steps of
reading signals from each of the at least a moisture sensor 32 - 33, 44 - 46 outside the at least a space 1 - 3 and the at least a temperature sensor 32 - 33, 44 - 46 outside the at least a space 1 - 3,
deriving a plurality of measured quantities from the signals read from the sensors 32 - 33, 44 - 46 disposed outside the at least a space 1 - 3,
determining an amount of latent heat outside the at least a space 1 - 3 as a function of the plurality of measured quantities derived from the signals read from the sensors 32 - 33, 44 - 46 disposed outside the at least a space 1 - 3,
wherein the amount of energy required for removal of the determined amount of latent heat from the at least a space 1 - 3 is determined also as a function of the determined amount of latent heat outside the at least a space 1 - 3.

In an embodiment, determining an amount of latent heat outside the at least a space 1 - 3 is done by determining an amount of latent heat normalized to a mass (such as 1 kg of air outside the at least a space 1 - 3).

The instant disclosure also teaches the aforementioned method, wherein the at least a fan coil unit 27, 34 comprises a fluid conveyor 31, 42 and a coil 28, 35, and
wherein the step of generating a load schedule for the at least a fan coil unit 27, 34 comprises the steps of
comparing the determined amount of latent heat outside the at least a space 1 - 3 to the target value related to latent heat inside the at least a space 1 - 3, and of
generating the load schedule for the at least a fan coil unit 27, 34 with instructions for the fan coil unit 27, 34 to activate the fluid conveyor 31, 42 without activating the coil 28, 35 if the amount of latent heat outside the at least a space 1 - 3 is equal to or less than the target value related to latent heat inside the at least a space 1 - 3.

The instant disclosure further teaches any of the aforementioned methods, the HVAC installation further comprising at least a flow sensor 32 - 33, 44 - 46 disposed inside the at least an inlet conduit, the method further comprising the steps of
reading signals from the at least a flow sensor 32 - 33, 44 - 46,
deriving values of fluid flow through the at least an inlet conduit from the signals read from the flow sensor 32 - 33, 44 - 46,
tracking the values of fluid flow through the at least an inlet conduit.

A non-transitory, tangible computer readable medium having instructions executable by a processor for performing the any of the aforementioned methods when said instructions are executed.

It should be understood that the foregoing relates only to certain embodiments of the invention and that numerous changes may be made therein without departing from and the scope of the invention as defined by the following claims. It should also be understood that the invention is not restricted to the illustrated embodiments and that various modifications can be made within the scope of the following claims.

### Reference numerals

- 1 - 3: spaces (rooms) of a structure (of a building)
- 4 - 6: variable air volume segments
- 7 - 8: water cooling segments
- 9 - 11: control dampers with controlled actuators (optional)
- 12: extract air duct and interface thereto
- 13 - 15: sensors within space 3
- 16 - 17: cooling units
- 18 - 19: control valves for cooling units 16, 17
- 20: air distribution unit (hub)
- 21: inlet port for recirculation air
- 22: inlet port for outside air
- 23 - 26: outlets of distribution unit 20
- 27: fan coil unit (recirculation air unit)
- 28: heat exchanger (cooling coil)
- 29: refrigerant circuit
- 30: control valve for coil 28
- 31: (gaseous) fluid conveyor
- 32 - 33: sensors of fan coil unit 27
- 34: outside air system
- 35: heat exchanger (cooling coil)
- 36: control valve for coil 35
- 37 - 38: heat and / or humidity exchangers
- 39: exhaust air (duct)
- 40: outside air conduit
- 41, 42: (gaseous) fluid conveyors
- 43: sensor(s) in exhaust air duct 39
- 44 - 46: sensors in outside air duct 40
- 47: heat exchanger
- 48: inlet pipe of refrigerant circuit 29
- 49: outlet pipe of refrigerant circuit 29
- 50: control valve
- 51: (variable speed) pump (optionally with a flow sensor and / or with a flow meter)
- 52: controller
- 53: processor
- 54: memory
- 55: display
- 56: input card
- 57: output card
- 58: controller with internet connection
- 59: cloud computer
- 60: sensor

## Claims

1. Method for controlling a HVAC installation for at least a space (1 - 3) in accordance with a target value related to latent heat in the at least a space (1 - 3) and in accordance with a maximum duration for removal of latent heat from the at least a space (1 - 3), the HVAC installation comprising at least an inlet conduit and at least an outlet conduit, each conduit in fluid communication with the at least a space (1 - 3), at least a temperature sensor (14 - 16) inside the at least a space (1 - 3), at least a moisture sensor (14 - 16) inside the at least a space (1 - 3), and at least a fan coil unit (27, 34) configured to remove latent heat from a fluid flowing through the at least an inlet conduit and into the at least a space (1 - 3), the method comprising the steps of:
reading signals from each of the at least a moisture sensor (14 - 16) inside the at least a space (1 - 3) and the at least a temperature sensor (14 - 16) inside the at least a space (1 - 3),
deriving a plurality of measured quantities from the signals read from the sensors (14 - 16) disposed inside the at least a space (1 - 3),
determining an amount of latent heat in the at least a space (1 - 3) as a function of the plurality of measured quantities derived from the sensor signals,
determining an amount of energy required for removal of the determined amount of latent heat from the at least a space (1 - 3) as a function of the determined amount of latent heat in the at least a space (1 - 3) and as a function of the target value related to latent heat in the at least a space (1 - 3),
generating a load schedule for the at least a fan coil unit (27, 34) that minimizes the cost of energy required for removal of the determined amount of latent heat from the at least a space (1 - 3) under the boundary conditions of the target value related to latent heat in the at least a space (1 - 3) and of the maximum duration for removal of latent heat from the at least a space (1 - 3),
controlling the at least a fan coil unit (27, 34) in accordance with the generated load schedule.

2. The method according to claim 1, wherein the target value related to latent heat in the at least a space (1 - 3) is a moisture level inside the at least a space (1 - 3) at a given temperature inside the at least a space (1 - 3).

3. The method according to any of the claims 1 or 2, wherein the step of generating a load schedule for the at least a fan coil unit (27, 34) comprises the step of
determining at least two candidate schedules as a function of efficiency data and of the determined amount of latent heat,
wherein the efficiency data are indicative of amounts of latent heat removed versus energy cost produced by the at least a fan coil unit (27, 34).

4. The method according to any of the claims 1 to 3, wherein the step of generating a load schedule for the at least a fan coil unit (27, 34) comprises the step of generating at least two candidate schedules and determining the energy cost associated with each candidate schedule.

5. The method according to claim 4, wherein the step of generating a load schedule for the at least a fan coil unit (27, 34) comprises the step of comparing at least two candidate schedules in terms of the energy cost associated with the candidate schedules.

6. The method according to claim 5, wherein the step of generating a load schedule for the at least a fan coil unit (27, 34) comprises the step of selecting as the load schedule for the at least a fan coil unit (27, 34) the candidate schedule associated with the lowest energy cost.

7. The method according to any of the claims 1 to 6, wherein the at least a fan coil unit (27, 34) comprises at least a power sensor, the method further comprising the steps of
reading at least a signal from the at least a power sensor,
deriving a power intake of the at least a fan coil unit (27, 34) from the at least a signal read from the at least a power sensor, and
wherein the step of controlling the at least a fan coil unit (27, 34) in accordance with the generated load schedule comprises the step of
determining and tracking at least an error value as a function of the generated load schedule and of the power intake of the at least a fan coil unit (27, 34).

8. The method according to claim 7, wherein the step of controlling the at least a fan coil unit (27, 34) in accordance with the generated load schedule further comprises the step of
generating an output value as a function of the generated load schedule and as a function of the at least an error value.

9. The method according to claim 7, wherein the step of controlling the at least a fan coil unit (27, 34) in accordance with the generated load schedule further comprises the steps of
weighting the at least an error value by a proportional parameter,
integrating the at least an error value,
generating an output value as a function of the generated load schedule and as a function of the weighted at least an error value and as a function of the integrated at least an error value.

10. The method according to any of the claims 1 to 9, wherein the step of controlling the at least a fan coil unit (27, 34) in accordance with the generated load schedule further comprises the steps of
reading signals from each of the at least a moisture sensor (14 - 16) inside the at least a space (1 - 3) and the at least a temperature sensor (14 - 16) inside the at least a space (1 - 3),
deriving a plurality of measured quantities from the signals read from the sensors (14 - 16),
determining an amount of latent heat in the at least a space (1 - 3) as a function of the plurality of measured quantities derived from the sensor signals,
comparing the determined amount of latent heat in the at least a space (1 - 3) to the target value related to latent heat in the at least a space (1 - 3).

11. The method according to claim 10, the HVAC installation further comprising at least a refrigerant cooling unit (7 - 8) disposed inside the at least a space (1 - 3), the method further comprising the step of
activating the at least a refrigerant cooling unit (7 - 8) when the determined amount of latent heat in the at least a space (1 - 3) is equal to or less than the target value related to latent heat in the at least a space (1 - 3).

12. The method according to any of the claims 1 to 11, the HVAC installation further comprising at least a temperature sensor (32 - 33, 44 - 46) disposed outside the at least a space (1 - 3) and at least a moisture sensor (32 - 33, 44 - 46) disposed outside the at least a space (1 - 3), the method further comprising the steps of
reading signals from each of the at least a moisture sensor (32 - 33, 44 - 46) outside the at least a space (1 - 3) and the at least a temperature sensor (32 - 33, 44 - 46) outside the at least a space (1 - 3),
deriving a plurality of measured quantities from the signals read from the sensors (32 - 33, 44 - 46) disposed outside the at least a space (1 - 3),
determining an amount of latent heat outside the at least a space (1 - 3) as a function of the plurality of measured quantities derived from the signals read from the sensors (32 - 33, 44 - 46) disposed outside the at least a space (1 - 3),
wherein the amount of energy required for removal of the determined amount of latent heat from the at least a space (1 - 3) is determined also as a function of the determined amount of latent heat outside the at least a space (1 - 3).

13. The method according to claim 12, wherein the at least a fan coil unit (27, 34) comprises a fluid conveyor (31, 42) and a coil (28, 35), and
wherein the step of generating a load schedule for the at least a fan coil unit (27, 34) comprises the steps of
comparing the determined amount of latent heat outside the at least a space (1 - 3) to the target value related to latent heat inside the at least a space (1 - 3), and of
generating the load schedule for the at least a fan coil unit (27, 34) with instructions for the fan coil unit (27, 34) to activate the fluid conveyor (31, 42) without activating the coil (28, 35) if the amount of latent heat outside the at least a space (1 - 3) is equal to or less than the target value related to latent heat inside the at least a space (1 - 3).

14. The method according to any of the claims 1 to 13, the HVAC installation further comprising at least a flow sensor (32 - 33, 44 - 46) disposed inside the at least an inlet conduit, the method further comprising the steps of
reading signals from the at least a flow sensor (32 - 33, 44 - 46),
deriving values of fluid flow through the at least an inlet conduit from the signals read from the flow sensor (32 - 33, 44 - 46),
tracking the values of fluid flow through the at least an inlet conduit.

15. A non-transitory, tangible computer readable medium having instructions executable by a processor for performing the method according to any of the previous claims when said instructions are executed.
